(19) Europäisches Patentamt
European Patent Office
Office européen des brevets

(11) **EP 4 723 279 A1**

(12) **EUROPEAN PATENT APPLICATION**
published in accordance with Art. 153(4) EPC

(43) Date of publication:
**08.04.2026 Bulletin 2026/15**

(21) Application number: **23938953.9**

(22) Date of filing: **01.06.2023**

(51) International Patent Classification (IPC):
**H01M 10/0567** $^{(2010.01)}$     **H01M 10/0525** $^{(2010.01)}$

(52) Cooperative Patent Classification (CPC):
Y02E 60/10

(86) International application number:
**PCT/CN2023/097821**

(87) International publication number:
**WO 2024/243966 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
 • **WU, Zeli**
   **Ningde, Fujian 352100 (CN)**
 • **HAN, Changlong**
   **Ningde, Fujian 352100 (CN)**
 • **WU, Qiao**
   **Ningde, Fujian 352100 (CN)**

 • **GUO, Jie**
   **Ningde, Fujian 352100 (CN)**
 • **LIU, Wenhao**
   **Ningde, Fujian 352100 (CN)**
 • **HUANG, Lei**
   **Ningde, Fujian 352100 (CN)**
 • **ZHANG, Cuiping**
   **Ningde, Fujian 352100 (CN)**
 • **FAN, Peng**
   **Ningde, Fujian 352100 (CN)**
 • **DENG, Yilin**
   **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **ELECTROLYTE FOR LITHIUM SECONDARY BATTERY, SECONDARY BATTERY, AND ELECTRIC DEVICE**

(57)    The present application discloses an electrolyte solution for a lithium secondary battery, a secondary battery, and an electrical device. The electrolyte solution for a lithium secondary battery includes a sulfate and fluorosulfonate ions, and a molar ratio of the sulfate to the fluorosulfonate ions is (8-223):1.

**FIG. 1**

EP 4 723 279 A1

## Description

## TECHNICAL FIELD

The present application relates to the technical field of secondary batteries, and particularly relates to an electrolyte solution for a lithium secondary battery, a secondary battery, and an electrical device.

## BACKGROUND

Secondary batteries have not only been applied to energy storage power source systems such as hydraulic, firepower, wind and solar power stations but have also widely applied to many fields, e.g., electric transportation vehicles such as electric bicycles, electric motorcycles, and electric automobiles, military equipment and aerospace.

However, after multiple cycles, the storage performance and cycling performance of the existing secondary batteries will significantly decrease, and the DC internal resistance will significantly increase.

## SUMMARY OF THE INVENTION

In view of the technical problems existing in the background, the present application provides an electrolyte solution for a lithium secondary battery, aiming to solve the problems that the storage performance and cycling performance significantly decrease and the DC internal resistance significantly increases after the secondary battery containing it undergoes multiple cycles.

In order to achieve the above purpose, the electrolyte solution for a lithium secondary battery includes sulfate and fluorosulfonate ions, and a molar ratio of the sulfate to the fluorosulfonate ions is (8-223):1.

The present application at least includes the following beneficial effects: the electrolyte solution for a lithium secondary battery includes the sulfate and the fluosulfonate ions, the electrolyte solution for a lithium secondary battery includes the sulfate and the fluosulfonate ions mixed according to the above ratio, and the sulfate and the fluosulfonate ions jointly participate in the formation of the positive and negative electrode interface film to form a dense composite film, thus improving the thermal stability and mechanical stability of the interface film, and playing a role of significantly improving the cycle life of the secondary battery; in addition, the formed interface film has strong ionic conductivity, thus reducing the DC internal resistance of the secondary battery. In this way, the simultaneous use of the sulfate and the fluorosulfonate ions can reduce the DC internal resistance of the secondary battery and improve the storage performance and cycling performance of the secondary battery.

In some embodiments of the present application, the molar ratio of the sulfate to the fluorosulfonate ions is (10-60): 1, and optionally (16.7-50): 1. In this way, the DC internal resistance of the secondary battery can be reduced, and the storage performance and cycling performance of the secondary battery can be improved.

In some embodiments of the present application, the molar concentration of the sulfate in the electrolyte solution for a lithium secondary battery is 0.08mol/L-0.2mol/L, and optionally 0.1mol/L-0.15mol/L. In this way, the molar concentration of the sulfate in the electrolyte solution for a lithium secondary battery is within the above range, thus reducing the DC internal resistance of the secondary battery and improving the storage performance and cycling performance of the secondary battery.

In some embodiments of the present application, the molar concentration of the fluorosulfonate ions in the electrolyte solution for a lithium secondary battery is 0.0009mol/L-0.009mol/L, and optionally 0.003mol/L-0.006mol/L. In this way, the molar concentration of the fluorosulfonate ions in the electrolyte solution for a lithium secondary battery is within the above range, thus reducing the DC internal resistance of the secondary battery and improving the storage performance and cycling performance of the secondary battery.

In some embodiments of the present application, the sulfate includes at least one of ethylene sulfate, 4-methyl ethylene sulfate, 4-fluoroethylene sulfate, 4-n-propyl ethylene sulfate, and 4,4'-bis(ethylene sulfate).

In some embodiments of the present application, the fluorosulfonate ions are $ASO_3F$, where A includes at least one of Li, Na, K, and H.

In some embodiments of the present application, the electrolyte solution for a lithium secondary battery further includes a positive electrode film-forming additive. In this way, the positive electrode film-forming additive can participate in the formation of the interface film on the positive electrode surface of the secondary battery, thus improving the storage performance and cycling performance of the secondary battery.

In some embodiments, the positive electrode film-forming additive includes at least one of fluoroethylene carbonate and 1,3-propanesultone. In this way, the positive electrode film-forming additive is one of the above substances and can participate in the formation of the film on the positive electrode surface of the secondary battery, thus improving the storage performance and cycling performance of the secondary battery.

In some embodiments of the present application, a ratio of the molar amount of the positive electrode film-forming additive to a sum of the molar amounts of the sulfate and the fluorosulfonate ions in the electrolyte solution for a lithium secondary battery is (0.05-0.37):1, and optionally (0.06-0.3):1. In this way, the ratio of the molar amount of the positive electrode film-forming additive in the electrolyte solution for a lithium secondary battery to the sum of the molar amounts of the sulfate and the fluosulfonate ion is within the above range, thus participating in the formation of the interface film on the positive electrode surface of the secondary battery, and improving the storage performance and cycling performance of the secondary battery.

In some embodiments of the present application, the molar concentration of the positive electrode film-forming additive in the electrolyte solution for a lithium secondary battery is 0.01mol/L-0.03mol/L. In this way, the concentration of the positive electrode film-forming additive in the electrolyte solution for a lithium secondary battery is within the above range, thus participating in the formation of the interface film on the positive electrode surface of the secondary battery, and improving the storage performance and cycling performance of the secondary battery.

In some embodiments of the present application, the electrolyte solution for a lithium secondary battery further includes difluorophosphate ions. In this way, the solvation structure of the electrolyte solution for a lithium secondary battery can be changed, so that more alkali metal ions participate in the film formation, thus improving the ionic conductivity of the interface film. In addition, the difluorophosphate ions, fluosulfonate ions, and sulfate jointly participate in the formation of the positive and negative electrode interface film, thus improving the thermal stability of the interface film, reducing the DC internal resistance of the secondary battery, and improving the storage performance and cycling performance of the secondary battery.

In some embodiments of the present application, a ratio of the molar amount of the difluorophosphate ions to a sum of the molar amounts of the sulfate and the fluorosulfonate ions is (0.048-1):1, and optionally (0.13-0.58):1. In this way, the ratio of the molar amount of the difluorophosphate ions in the electrolyte solution for a lithium secondary battery to the sum of the molar amounts of the sulfate and the fluorosulfonate ions is within the above range, thus reducing the DC internal resistance of the secondary battery and improving the storage performance and cycling performance of the secondary battery.

In some embodiments of the present application, the molar concentration of the difluorophosphate ions is 0.01mol/L-0.08mol/L, and optionally 0.02mol/L-0.06mol/L. In this way, the molar concentration of the difluorophosphate ions in the electrolyte solution for a lithium secondary battery is within the above range, thus reducing the DC internal resistance of the secondary battery and improving the storage performance and cycling performance of the secondary battery.

In some embodiments of the present application, the difluorophosphate ions are $MPO_2F_2$, where M includes at least one of Li, Na, K, and H.

In some embodiments of the present application, the electrolyte solution for a lithium secondary battery further includes tetrafluoroborate ions. The tetrafluoroborate ions are compatible with the electrolyte solution system for the lithium secondary battery can participate in the formation of the negative electrode interface film of the secondary battery, thus opening the ion channel, and reducing the DC internal resistance of the secondary battery.

In some embodiments of the present application, a ratio of the molar amount of the tetrafluoroborate ions to a sum of the molar amounts of the sulfate and the fluorosulfonate ions in the electrolyte solution for a lithium secondary battery is (0.0024-0.012):1, and optionally (0.0038-0.008):1. In this way, the ratio of the molar amount of the tetrafluoroborate ions in the electrolyte solution for a lithium secondary battery to the sum of the molar amounts of the sulfate and the fluosulfonate ion is within the above range, thus participating in the formation of the negative electrode interface film of the secondary battery, and improving the DC internal resistance of the secondary battery.

In some embodiments of the present application, the molar concentration of the tetrafluoroborate ions in the electrolyte solution for a lithium secondary battery is 0.0005mol/L-0.001mol/L, and optionally 0.0006mol/L-0.0008mol/L. In this way, the molar concentration of the tetrafluoroborate ions in the electrolyte solution for a lithium secondary battery is within the above range, thus participating in the formation of the negative electrode interface film of the secondary battery, and reducing the DC internal resistance of the secondary battery.

In some embodiments of the present application, the tetrafluoroborate ions are provided by at least one of the following substances: tetrafluoroboric acid, sodium tetrafluoroborate, potassium tetrafluoroborate, and lithium tetrafluoroborate.

In some embodiments of the present application, the content of water in the electrolyte solution for a lithium secondary battery is less than or equal to 20ppm. In this way, the content of water in the electrolyte solution for a lithium secondary battery is within the above range, thus reducing the damage caused by water to the interface film especially at high voltage, and improving the storage performance and cycling performance of the secondary battery.

In some embodiments of the present application, the content of HF in the electrolyte solution for a lithium secondary battery is less than or equal to 150ppm. In this way, the content of HF in the electrolyte solution for a lithium secondary battery is within the above range, thus reducing the damage caused by HF to the interface film especially at high voltage, and improving the storage performance and cycling performance of the secondary battery.

According to a second aspect, the present application provides a secondary battery, which includes the electrolyte solution for a lithium secondary battery according to the first aspect of the present application. In this way, the secondary battery has low DC internal resistance and excellent storage performance and cycling performance.

In some embodiments of the present application, the secondary battery includes a positive electrode active material, and the positive electrode active material includes $Li_xNi_{(1-y-z)}Co_yM_zO_{2-b}$, where M includes at least one of Mn, Al, Fe, Ti, Mg, Cr, Ga, Cu, Zn, Nb, and Zr, $0<x\leq1.2$, $0.05\leq y\leq0.8$, $0.01\leq z\leq0.5$, and $0\leq b\leq0.2$.

In some embodiments of the present application, the BET specific surface area of the positive electrode active material is less than or equal to $3m^2/g$, and optionally, the BET specific surface area of the positive electrode active material is $1m^2/g$-$2.5m^2/g$.

According to a third aspect, the present application provides an electrical device, which includes the secondary battery according to the second aspect.

Additional aspects and advantages of the present application will be set forth in part in the description which follows, and in part will be obvious from the description which follows, or may be learned by practice of the present application.

## DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the figures:

FIG. 1 is a schematic structural diagram of a secondary battery according to an embodiment of the present application;
FIG. 2 is a schematic structural diagram of a battery module according to an embodiment of the present application;
FIG. 3 is a schematic structural diagram of a battery pack according to an embodiment of the present application;
FIG. 4 is an exploded diagram of FIG. 3; and
FIG. 5 is a schematic diagram of an electrical device in which a battery is used as a power source according to an embodiment.

Description of reference numerals:

1-secondary battery; 2-battery module; 3-battery pack; 4-upper box; 5-lower box

## DETAILED DESCRIPTION

The embodiments of the technical solution of the present application will be described in detail below. The following embodiments are only used to more clearly illustrate the technical solutions of the present application, therefore only as examples, and cannot be used to limit the scope of protection of the present application.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

For conciseness, only certain numerical ranges are explicitly disclosed herein. However, any lower limit can be combined with any upper limit to form a range that is not explicitly recited; any lower limit can be combined with another lower limit to form a range that is not explicitly recited; and any upper limit may be combined with another upper limit to form a range that is not explicitly recited. Additionally, each individually disclosed point or single numerical value may itself serve as a lower or upper limit to form a range not explicitly recited by combining with any other point or single numerical value, or with other lower or upper limits.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally means that the associated objects before and after it are in an "or" relationship.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

Secondary batteries have not only been applied to energy storage power source systems such as hydraulic, firepower, wind and solar power stations but have also widely applied to many fields, e.g., electric transportation vehicles such as electric bicycles, electric motorcycles, and electric automobiles, military equipment and aerospace. With the continuous expansion of the application field of the secondary power batteries, the market demand is also constantly expanding.

In the first charging and discharging process of the secondary battery, the electrode material (such as negative electrode active material) reacts with the electrolyte solution for a lithium secondary battery on a solid-liquid phase interface, forming a passivation layer covering the surface of the electrode material. This passivation layer is a kind of interface film, has the characteristics of solid electrolyte, and is an electron insulator but an excellent conductor of alkali metal ions. Alkali metal ions can be freely intercalated and deintercalated through the passivation layer. Therefore, this passivation film is called positive and negative electrode interface film.

However, the existing secondary battery has the following problems: on the one hand, with the charging and discharging cycle of the secondary battery, the interface film on the positive and negative electrode interface is unstable and easy to be damaged, and the transmission resistance of alkali metal ions will also become larger, resulting in the increase of the DC impedance of the secondary battery, and the deterioration of the storage performance and cycling performance; on the other hand, during the charging and discharging of the secondary battery, under high temperature and high pressure, the positive electrode active material has strong oxidizing properties and will oxidize the electrolyte solution for a lithium secondary battery to generate a large amount of gas, resulting in the loss of the electrolyte solution and positive electrode active material of the lithium secondary battery, and affecting the storage performance and cycling performance of the secondary battery.

The sulfate and the fluosulfonate ions jointly participate in the formation of the positive and negative electrode interface film to form a dense composite film, thus improving the thermal stability and mechanical stability of the interface film, and playing a role of significantly improving the cycle life of the secondary battery; in addition, the formed interface film has strong ionic conductivity, thus reducing the DC internal resistance of the secondary battery. In this way, the simultaneous use of the sulfate and the fluorosulfonate ions can reduce the DC internal resistance of the secondary battery and improve the storage performance and cycling performance of the secondary battery. On the other hand, the interface film has thermal stability and mechanical stability, thus reducing the probability that the interface film is ruptured, reducing the reaction between the positive electrode active material and the electrolyte solution for a lithium secondary battery, inhibiting the gas production of the secondary battery, reducing the loss of the electrolyte solution for a lithium secondary battery and the positive electrode active material, and improving the storage performance and cycling performance of the secondary battery.

The positive electrode active material disclosed in the embodiments of the present application is applicable to the secondary battery. The secondary battery disclosed in the embodiments of the present application can be used in an electrical device that uses the secondary battery as the power source or in various energy storage systems that use batteries as energy storage elements. The electrical device may include, but is not limited to, a mobile phone, a tablet, a laptop, an electric toy, an electric tool, a storage battery car, an electric vehicle, a ship, a spacecraft, etc. The electric toy may include fixed or mobile electric toys, such as a game machine, an electric vehicle toy, an electric ship toy, and an electric airplane toy. The spacecraft may include an airplane, a rocket, a space shuttle, a spaceship, and the like.

According to a first aspect, the present application provides an electrolyte solution for a lithium secondary battery, where the electrolyte solution for a lithium secondary battery includes a sulfate and fluorosulfonate ions, and a molar ratio of the sulfate to the fluorosulfonate ions is (8-223): 1.

The present application at least includes the following beneficial effects: the electrolyte solution for a lithium secondary battery includes the sulfate and the fluosulfonate ions, the electrolyte solution for a lithium secondary battery includes the sulfate and the fluosulfonate ions mixed according to the above ratio, and the two jointly participate in the formation of the positive and negative electrode interface film to form a dense composite film, thus improving the thermal stability and mechanical stability of the interface film, and also improving the ionic conductivity of the interface film. In this way, the simultaneous use of the sulfate and the fluorosulfonate ions can reduce the DC internal resistance of the secondary battery and improve the storage performance and cycling performance of the secondary battery.

Direct current internal resistance (DCR) refers to the resistance experienced by the current inside the battery cell. After the discharging process of the secondary battery is completed, the voltage of the secondary battery will rebound due to polarization. DC impedance technology calculates the internal resistance of the secondary battery by using the difference between the voltage at the moment just before the discharging is completed and the stabilized voltage after the discharging is completed in the intermittent discharging process.

In some embodiments of the present application, the sulfate may include at least one of ethylene sulfate, 4-methyl ethylene sulfate, 4-fluoroethylene sulfate, 4-n-propyl ethylene sulfate, and 4,4'-bis(ethylene sulfate). In this way, by using the sulfate in the electrolyte solution for a lithium secondary battery in the present application, it can participate in the formation of the positive and negative electrode interface film, thus making the interface film flexible, adapting to the expansion and contraction of the electrode plate of the secondary battery in the cycling process, improving the mechanical stability of the interface film, improving the ionic conductivity of the interface film, improving the cycling performance of the secondary battery, and reducing the DC internal resistance. In some other embodiments of the present application, the sulphate includes 4,4'-bis(ethylene sulfate).

In some embodiments of the present application, the fluorosulfonate ions are $ASO_3F$, where A includes at least one of Li, Na, K, and H. Specifically, the substance containing the fluorosulfonate ions can provide the fluorosulfonate ions, and the interface formed by the participation of the fluorosulfonate ions is very dense and has good thermal stability, thus improving the storage performance of the secondary battery while reducing the DC impedance of the secondary battery.

In some embodiments of the present application, the molar ratio of the sulfate to the fluosulfonate ions may be (8.9-222):1, (10-200):1, (20-190):1, (30-180):1, (40-170):1, (50-160):1, (60-150):1, (70-140):1, (80-130):1, (90-120):1, (100-110):1, etc. In some other embodiments of the present application, the molar ratio of the sulfate to the fluosulfonate ions in the electrolyte solution for a lithium secondary battery is (10-60):1, for example (16.7-50):1. Specifically, when the molar ratio of the sulfate to the fluorosulfonate ions is within the above range, thus reducing the decrease of the thermal stability of the interface film since the amount of the sulfate is too large, improving the storage performance of the secondary battery, reducing the defects of insufficient formation of the interface film and poor ionic conductivity since the amount of the sulfate is too small, reducing the DC internal resistance of the secondary battery, and improving the storage performance and cycling performance of the secondary battery.

In some embodiments of the present application, the molar concentration of the sulfate in the electrolyte solution for a lithium secondary battery is 0.08mol/L-0.2mol/L. For example, the molar concentration of the sulfate in the electrolyte solution for a lithium secondary battery may be 0.04 mol/L-0.18mol/L, 0.09mol/L-0.17mol/L, 0.1mol/L-0.16mol/L, 0.11mol/L-0.15mol/L, 0.12mol/L-0.14mol/L, etc. In this way, the molar concentration of the sulfate in the electrolyte solution for a lithium secondary battery is within the above range, thus reducing the decrease of the thermal stability of the interface film since the amount of the sulfate is too large, improving the storage performance of the secondary battery, reducing the defects of insufficient formation of the interface film and poor ionic conductivity since the amount of the sulfate is too small, reducing the DC internal resistance of the secondary battery, and improving the storage performance and cycling performance of the secondary battery. In some other embodiments of the present application, the molar concentration of the sulfate in the electrolyte solution for a lithium secondary battery is 0.1mol/L-0.15mol/L.

In some embodiments of the present application, the molar concentration of the fluorosulfonate ions in the electrolyte solution for a lithium secondary battery is 0.0009mol/L-0.009mol/L. For example, the molar concentration of the fluorosulfonate ions in the electrolyte solution for a lithium secondary battery may be 0.001mol/L-0.009mol/L, 0.002mol/L-0.008mol/L, 0.003mol/L-0.007mol/L, 0.004mol/L-0.006mol/L, etc. Specifically, the molar concentration of the fluorosulfonate ions in the electrolyte solution for a lithium secondary battery is within the above range, thus reducing the problem of the increase of the viscosity of the electrolyte solution for a lithium secondary battery caused by the addition of the substance containing the fluorosulfonate ions, reducing the DC internal resistance of the secondary battery, improving the thermal stability of the interface film, and improving the storage performance of the secondary battery. In some other embodiments of the present application, the molar concentration of the fluorosulfonate ions in the electrolyte solution for a lithium secondary battery is 0.003mol/L-0.006mol/L.

In some embodiments of the present application, the electrolyte solution for a lithium secondary battery further includes a positive electrode film-forming additive. Specifically, the positive electrode film-forming additive can participate in the formation of the stable positive electrode interface film, thus reducing the DC impedance of the secondary battery, and improving the cycling performance of the secondary battery.

In some embodiments, the positive electrode film-forming additive includes at least one of fluoroethylene carbonate and 1,3-propanesultone. Specifically, the positive electrode interface film formed with the participation of fluoroethylene carbonate and 1,3-propanesultone has excellent performance, thus forming a dense interface film without increasing the impedance, preventing the decomposition of the electrolyte solution for a lithium secondary battery, reducing the DC internal resistance of the secondary battery, and improving the storage performance and cycling performance of the secondary battery.

In some embodiments of the present application, a ratio of the molar amount of the positive electrode film-forming additive to the sum of the molar amounts of the sulfate and the fluorosulfonate ions in the electrolyte solution for a lithium secondary battery is (0.05-0.37):1. For example, the ratio of the molar amount of the positive electrode film-forming additive to the sum of the molar amounts of the sulfate and the fluorosulfonate ions may be (0.05-0.36):1, (0.08-0.35):1, (0.1-0.33):1, (0.12-0.3):1, (0.15-0.29):1, (0.13-0.25):1, (0.15-0.22):1, (0.17-0.2):1, etc. In this way, the ratio of the molar amount of the positive electrode film-forming additive in the electrolyte solution for a lithium secondary battery to the sum of the molar amounts of the sulfate and the fluosulfonate ions is within the above range, thus not only reducing the impact on the functioning of the sulfate and the fluosulfonate ions since the amount of the positive electrode film-forming additive is too large and preventing the DC impedance of the secondary battery from increasing, but also reducing the inability of the positive electrode film-forming additive to play a role in the formation of the positive electrode interface film since the amount of the positive electrode film-forming additive is too small, reducing the DC internal resistance of the secondary battery, and improving the storage performance and cycling performance of the secondary battery. In some other embodiments of the present application, the ratio of the molar amount of the positive electrode film-forming additive to the sum of the molar amounts of the sulfate and the fluorosulfonate ions in the electrolyte solution for a lithium secondary battery is (0.06-0.3):1.

In some embodiments of the present application, the molar concentration of the positive electrode film-forming additive in the electrolyte solution for a lithium secondary battery is 0.01mol/L-0.03mol/L. For example, the molar concentration of the positive electrode film-forming additive in the electrolyte solution for a lithium secondary battery may be 0.01mol/L-0.025mol/L, 0.013mol/L-0.024mol/L, 0.015mol/L-0.023mol/L, 0.018mol/L-0.02mol/L, etc. In this way, the concentration of the positive electrode film-forming additive in the electrolyte solution for a lithium secondary battery is within the above range, thus not only reducing the increase of the DC impedance of the secondary battery since the amount of the positive electrode film-forming additive is too large, but also reducing the inability of the positive electrode film-forming additive to play a role in the formation of the positive electrode interface film since the amount of the positive electrode film-forming additive is too small, reducing the DC internal resistance of the secondary battery, and improving the storage performance and cycling performance of the secondary battery.

In some embodiments of the present application, the electrolyte solution for a lithium secondary battery further includes difluorophosphate ions. In this way, the difluorophosphate ions can change the solvation structure of the electrolyte solution for a lithium secondary battery, so that more alkali metal ions can participate in the film formation, thus improving the ionic conductivity of the interface film, and improving the transmission resistance of alkali metal ions; in addition, the difluorophosphate ions can also participate in the formation of the positive and negative electrode interface film, thus improving the thermal stability of the interface film, and improving the storage performance of the secondary battery while reducing the DC impedance of the secondary battery.

In some embodiments of the present application, the ratio of the molar amount of the difluorophosphate ions to the sum of the molar amounts of the sulfate and the fluorosulfonate ions in the electrolyte solution for a lithium secondary battery is (0.048-1):1. For example, the ratio of the molar amount of the difluorophosphate ions to the sum of the molar amounts of the sulfate and the fluorosulfonate ions in the electrolyte solution for a lithium secondary battery may be (0.048-0.95):1, (0.05-0.9):1, (0.1-0.8):1, (0.2-0.7):1, (0.3-0.6):1, (0.4-0.5):1, etc. Specifically, the ratio of the molar amount of the difluorophosphate ions to the sum of the molar amounts of the sulfate and the fluosulfonate ions in the electrolyte solution for a lithium secondary battery is within the above range, thus changing the solvation structure of the electrolyte solution for a lithium secondary battery, so that more alkali metal ions can participate in the film formation, improving the ionic conductivity of the interface film, and improving the transmission resistance of alkali metal ions; in addition, the difluorophosphate ions can also participate in the formation of the positive and negative interface film, thus improving the thermal stability of the interface film, and improving the storage performance of the secondary battery while reducing the DC impedance of the secondary battery. In some other embodiments of the present application, the ratio of the molar amount of the difluorophosphate ions to the sum of the molar amounts of the sulfate and the fluorosulfonate ions in the electrolyte solution for a lithium secondary battery is (0.13-0.58):1.

In some embodiments of the present application, the molar concentration of the difluorophosphate ions in the electrolyte solution for a lithium secondary battery is 0.01mol/L-0.08mol/L. For example, the molar concentration of the difluorophosphate ions in the electrolyte solution for a lithium secondary battery is 0.01mol/L-0.07mol/L, 0.02mol/L-0.06mol/L, 0.03mol/L-0.05mol/L, 0.04mol/L-0.05mol/L, etc. Specifically, the molar concentration of the difluorophosphate ions in the electrolyte solution for a lithium secondary battery is within the above range, thus not only reducing the impact on the functioning of the fluorosulfonate ions and sulfate since the amount of the added difluorophosphate ions is too large, but also allowing the difluorophosphate ions to function effectively, reducing the DC internal resistance of the secondary battery, and improving the storage performance and cycling performance of the secondary battery. In some other embodiments of the present application, the molar concentration of the difluorophosphate ions in the electrolyte solution for a lithium secondary battery is 0.02mol/L-0.06mol/L.

In some embodiments of the present application, the difluorophosphate ions are $MPO_2F_2$, where M includes at least one of Li, Na, K, and H. Specifically, the substance containing the difluorophosphate ions can provide the difluorophosphate ions and change the solvation structure of the electrolyte solution for a lithium secondary battery, so that more alkali metal ions can participate in the film formation, thus improving the ionic conductivity of the interface film, and improving the transmission resistance of alkali metal ions; in addition, the difluorophosphate ions can also participate in the formation of the positive and negative electrode interface film, thus improving the thermal stability of the interface film, and improving the storage performance of the secondary battery while reducing the DC impedance of the secondary battery.

In some embodiments of the present application, the electrolyte solution for a lithium secondary battery further includes tetrafluoroborate ions. The tetrafluoroborate ions are compatible with the electrolyte solution system for the lithium secondary battery and can participate in the formation of the negative electrode interface film of the secondary battery, thus opening the ion channel, and reducing the DC internal resistance of the secondary battery.

In some embodiments of the present application, a substance containing the tetrafluoroborate ions may be at least one of tetrafluoroboric acid, sodium tetrafluoroborate, potassium tetrafluoroborate, and lithium tetrafluoroborate.

In some embodiments of the present application, the ratio of the molar amount of the tetrafluoroborate ions to the sum of the molar amounts of the sulfate and the fluorosulfonate ions in the electrolyte solution for a lithium secondary battery is (0.0024-0.012):1. For example, the ratio of the molar amount of the fluorosulfonate ions to the sum of the molar amounts of the sulfate and the fluorosulfonate ions may be (0.0024-0.011):1, (0.003-0.01):1, (0.004-0.009):1, (0.005-0.008):1, (0.006-0.007):1, etc. In this way, the ratio of the molar amount of the tetrafluoroborate ions in the electrolyte solution for a lithium secondary battery to the sum of the molar amounts of the sulfate and the fluosulfonate ions is within the above range, thus not only reducing the impact on the functioning of the sulfate and the fluosulfonate ions since the amount of the tetrafluoroborate ions is too large and preventing the DC impedance of the secondary battery from increasing, but also reducing the inability of the tetrafluoroborate ions to play a role in the formation of the negative electrode interface film since the amount of the tetrafluoroborate ions is too small, reducing the DC internal resistance of the secondary battery, and improving the storage performance and cycling performance of the secondary battery. In some other embodiments of the present application, the ratio of the molar amount of the tetrafluoroborate ions to the sum of the molar amounts of the sulfate and the fluorosulfonate ions in the electrolyte solution for a lithium secondary battery is (0.0038-0.008):1.

In some embodiments of the present application, the molar concentration of the tetrafluoroborate ions in the electrolyte solution for a lithium secondary battery is 0.0005mol/L-0.001mol/L. For example, the molar concentration of the tetrafluoroborate ions in the electrolyte solution for a lithium secondary battery may be 0.0005mol/L-0.0009mol/L, 0.0006mol/L-0.0008mol/L, 0.0007mol/L-0.0008mol/L, etc. In this way, the molar concentration of the tetrafluoroborate ions in the electrolyte solution for a lithium secondary battery is within the above range, thus reducing the deterioration of the DC impedance of the secondary battery since the amount of the tetrafluoroborate ions is too large, allowing the tetrafluoroborate ions to play a role in forming the negative electrode interface film, reducing the DC internal resistance of the secondary battery, and improving the storage performance and cycling performance of the secondary battery. In some other embodiments of the present application, the molar concentration of the tetrafluoroborate ions in the electrolyte solution for a lithium secondary battery is 0.0006mol/L-0.0008mol/L.

In some embodiments of the present application, the content of water in the electrolyte solution for a lithium secondary battery is less than or equal to 20ppm. For example, the content of water in the electrolyte solution for a lithium secondary battery may be 1ppm-19ppm, 2ppm-18ppm, 3ppm-17ppm, 4ppm-16ppm, 5ppm-15ppm, 6ppm-14ppm, 7ppm-13ppm, 8ppm-12ppm, 9ppm-11ppm, etc. In this way, the content of water in the electrolyte solution for a lithium secondary battery is within the above range, thus reducing the damage caused by water to the interface film of the secondary battery especially at high voltage, reducing the DC internal resistance of the secondary battery, and improving the storage performance and cycling performance of the secondary battery.

In some embodiments of the present application, the content of HF in the electrolyte solution for a lithium secondary battery is less than or equal to 150ppm. For example, the content of HF in the electrolyte solution for a lithium secondary battery may be 10ppm-140ppm, 20ppm-130ppm, 30ppm-120ppm, 40ppm-110ppm, 50ppm-100ppm, 60ppm-90ppm, 70ppm-80ppm, etc. In this way, the content of HF in the electrolyte solution for a lithium secondary battery is within the above range, thus reducing the damage caused by HF to the interface film of the secondary battery especially at high voltage, reducing the DC interface resistance of the secondary battery, and improving the storage performance and cycling performance of the secondary battery.

It is to be understood that the control of water and HF in the electrolyte solution for a lithium secondary battery can be controlled by using molecular sieves to remove water and HF. Specifically, molecular sieves may be added to the electrolyte solution for a lithium secondary battery, the molecular sieves are enabled to fully contact with the electrolyte solution for a lithium secondary battery to adsorb water and HF in the electrolyte solution for a lithium secondary battery, and then the molecular sieves are separated from the electrolyte solution for a lithium secondary battery through a method such as filtration or centrifugation.

It is to be understood that the content of water and HF in the electrolyte solution for a lithium secondary battery can be measured through the following method:

Testing of content of water: an electrolyte solution for a lithium secondary battery is injected into an electrolytic cell that has reached a balance. After an indicator electrode detects $H_2O$, an electrode oxidizes $I^-$ to $I_2$, and $I_2$ and $H_2O$ undergo a quantitative chemical reaction, thus calculating the content of water; according to 5.9 Determination of Water in HG/T4067-2015 Hexafluorophosphate Electrolyte Solution; a quantitative reaction equation for $I_2$ and $H_2O$: $H_2O+I_2+SO_2+3C_5H_5N=2C_5H_5N \cdot HI+C_5H_5N \cdot SO_3$; the amount of water is calculated based on the amount of consumed iodine.

Testing of content of hydrofluoric acid: in a dry environment, free acid in the electrolyte solution is titrated with a triethylamine standard solution, and the content of HF is calculated;

5.10 Determination of Content of Free Acid in HG/T4067-2015 Lithium Hexafluorophosphate Electrolyte Solution; $HF(ppm)=(V2-V1)/1000*C*20/m*1000000=(V2-V1)*C/m*20000$;

where 0.01 is the concentration of a standard solution, 0.02mol/L;

V1 is the volume reading of a burette before titration, ml;

V2 is the volume reading of the burette after an electrolyte solution sample is added and the titration terminates, ml;

20 is the molecular weight of HF, g/mol;

m is the amount of the weighed electrolyte solution, g;

20000 is the coefficient for conversion into ug/g.

In some embodiments of the present application, the electrolyte solution for a lithium secondary battery may further include an electrolyte salt and a solvent.

When the secondary battery is a lithium ion battery, as an example, the electrolyte salt may include, but not limited to, at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO_2F_2$), lithium difluoro bis(oxalato)phosphate (LiDFOP), and lithium tetrafluoro-o(oxalato)phosphate (LiTFOP).

As an example, the solvent may include, but not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1, 4-butyrolactone (GBL), sulfolane (SF), methylsulfonylmethane (MSM), ethyl methyl sulfone (EMS), and ethylsulfonylethane (ESE).

In some embodiments, the electrolyte solution for a lithium secondary battery may further include an additive. For example, the additive may include an additive capable of improving certain performances of the secondary battery, such as an additive for improving the overcharging performance of the secondary battery, an additive for improving the high-temperature performance of the secondary battery, and an additive for improving the low-temperature performance of the secondary battery.

According to a second aspect, the present application provides a secondary battery, which includes the electrolyte solution for a lithium secondary battery according to the first aspect of the present application. In this way, the secondary battery has low DC internal resistance and excellent storage performance and cycling performance.

The secondary battery refers to a battery that can be used continually by activating an active material in a charging manner after being discharged.

Generally, the secondary battery includes a positive electrode plate, a negative electrode plate, a separator and an electrolyte. During charging and discharging of the secondary battery, active ions (alkali metal ions) are intercalated and deintercalated back and forth between the positive electrode plate and the negative electrode plate. The separator is arranged between the positive electrode plate and the negative electrode plate, to serve for separation. The electrolyte plays the role of conducting ions between the positive electrode plate and the negative electrode plate.

In some embodiments of the present application, the secondary battery may be a lithium-ion battery.

[Positive electrode plate]

In a secondary battery, the positive electrode plate generally includes a positive electrode current collector and a positive electrode active material layer arranged on the positive electrode current collector, and the positive electrode active material layer includes a positive electrode active material.

The positive electrode current collector may be a conventional metal foil or a composite current collector (a metal material may be arranged on a polymer substrate to form a composite current collector). As an example, the positive electrode current collector may use aluminum foil.

The specific type of the positive electrode active material is not limited. Any material that can be used as the positive electrode active material of the secondary battery known in the art may be used, and may be selected by those skilled in the art according to the actual need.

For example, in a case that the secondary battery is a lithium-ion battery, as an example, the positive electrode active material may include, but not limited to, at least one of a lithium transition metal oxide, a lithium-containing phosphate with an olivine structure, and respective modified compounds thereof. Examples of the lithium transition metal oxide can include, but are not limited to, at least one of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and modified compounds thereof. Examples of the lithium-containing phosphate with an olivine structure can include, but are not limited to, at least one of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon, and modified compounds thereof. These materials are all commercially available.

In some embodiments of the present application, the positive electrode active material includes $Li_xNi_{(1-y-z)}$

$Co_yM_zO_{2-b}$, where M includes at least one of Mn, Al, Fe, Ti, Mg, Cr, Ga, Cu, Zn, Nb, and Zr, $0<x\leq1.2$, $0.05\leq y\leq0.8$, $0.01\leq z\leq0.5$, and $0\leq b\leq0.2$.

For example, x may satisfy: $0.2\leq x\leq1.2$, $0.4\leq x\leq1.1$, $0.5\leq x\leq1.0$, $0.6\leq x\leq0.9$, $0.7\leq x\leq0.8$, etc; y may satisfy: $0.05\leq y\leq0.7$, $0.1\leq y\leq0.6$, $0.2\leq y\leq0.5$, $0.3\leq y\leq0.4$, etc; z may satisfy: $0.01\leq z\leq0.45$, $0.1\leq z\leq0.4$, $0.2\leq z\leq0.3$, etc; b may satisfy: $0\leq b\leq0.15$, $0.02\leq b\leq0.13$, $0.05\leq b\leq0.1$, $0.07\leq b\leq0.09$, etc.

It needs be noted that in the positive electrode plate, the secondary battery, or the electrical device, due to processes such as formation and cycling of the secondary battery, lithium ions will be consumed, so that the measured lithium element content x in the positive electrode active material will be less than 1. At the same time, if a lithium supplements is used for the positive electrode plate and the negative electrode plate, after the secondary battery undergoes processes such as formation and cycling, the measured lithium element content x in the positive electrode active material will be greater than 1.

In addition, due to processes such as formation and cycling of the secondary battery, lattice oxygen release may occur in the positive electrode active material, resulting in oxygen loss. Therefore, the oxygen element content in the positive electrode active material may be less than 2.

In some embodiments of the present application, the BET specific surface area of the positive electrode active material is less than or equal to $3m^2/g$. For example, the BET specific surface area of the positive electrode active material may be $0.3m^2/g$-$3m^2/g$, $1m^2/g$-$2.5m^2/g$, $1.2m^2/g$-$2.3m^2/g$, $1.5m^2/g$-$2m^2/g$, etc. Specifically, the BET specific surface area of the positive electrode active material is within the above range, thus reducing the side reaction of the positive electrode active material under high voltage, and improving the storage and cycling performance of the secondary battery. In some other embodiments of the present application, the BET specific surface area of the positive electrode active material is $1 m^2/g$-$2.5m^2/g$.

It is to be understood that the BET specific surface area of the positive electrode active material may be measured by using the following method: a GeminiVII2390 multi-station fully automatic BET specific surface area and porosity analyzer from Micromeritics, USA, is used, about 7g of a sample were taken and placed in a 9cc long tube with a bulb, degassing was performed at 200°C for 2h, and then it is placed in a main machine for testing to obtain the BET (specific surface area) data of the positive electrode active material.

The positive electrode active material layer generally further optionally includes a binder, a conductive agent, and other optional adjuvants.

By way of example, the conductive agent can include at least one of superconducting carbon, acetylene black, carbon black, Ketjen black, carbon dots, carbon nanotubes, Super P (SP), graphene, and carbon nanofibers.

As an example, the binder may include at least one of styrene butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Negative electrode plate]

In a secondary battery, the negative electrode plate typically includes a negative electrode current collector and a negative electrode active material layer arranged on the negative electrode current collector, and the negative electrode active material layer includes a negative electrode active material.

The negative electrode current collector may be at conventional metal foil or a composite current collector (for example, a metal material may be arranged on a polymer substrate to form a composite current collector). As an example, the negative electrode current collector may be a copper foil.

The specific type of the negative electrode active material is not limited. Any material that can be used as the negative electrode active material of the secondary battery as known in the art may be used, and may be selected by those skilled in the art according to the actual need. As an example, the negative electrode active material may include, but not limited to, at least one of artificial graphite, natural graphite, hard carbon, soft carbon, a silicon-based material, and a tin-based material. The silicon-based material may include at least one of elemental silicon, a silicon-oxygen compound (such as silicon monoxide), a silicon-carbon compound, a silicon-nitrogen compound, and a silicon alloy. The tin-based material may include at least one of elemental tin, a tin-oxygen compound, and a tin alloy. These materials are all commercially available.

In some implementations, in order to further improve the energy density of the secondary battery, the negative electrode active material may include a silicon-based material.

The negative electrode active material layer generally further optionally includes a binder, a conductive agent, and other optional adjuvants.

As example, the conductive agent may include at least one of superconducting carbon, acetylene black, carbon black, Ketjen black, carbon dots, carbon nanotubes, graphene, and carbon nanofibers.

As an example, the binder may include, but not limited to, at least one of polymerized styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional adjuvants may include a thickener and dispersant (for example, carboxymethylcellulose sodium (CMC-Na)) or PTC thermistor material.

The above separator film is not particularly limited in the present application, and any well-known separator film having a porous structure with electrochemical stability and mechanical stability can be selected according to actual needs, for example, it can include a single-layer or multi-layer thin film including at least one of glass fibers, non-woven fabric, polyethylene, polypropylene, and polyvinylidene fluoride.

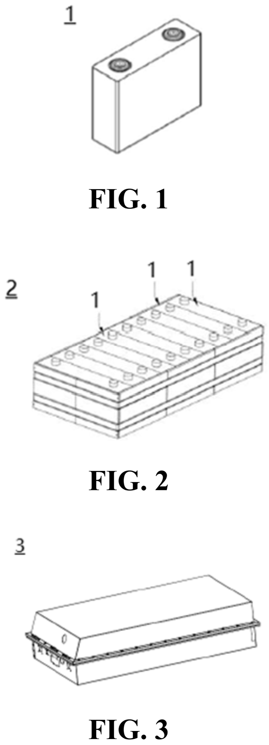

The shape of the secondary battery is not specially limited in this embodiment of the present application, which may be a cylindrical shape, a square shape, or any other shape. FIG. 1 shows a secondary battery 1 having a square structure as an example.

In some embodiments, the secondary battery may include an outer package. The outer package may be used for encapsulating the positive electrode plate, the negative electrode plate, and the electrolyte.

In some embodiments, the outer package may include a case and a cover plate. The case may include a bottom plate and a side plate connected to the bottom plate, which enclose to form an accommodating cavity. The case has an opening in communication with the accommodating cavity, and the cover plate can cover the opening to close the accommodating cavity.

The positive electrode plate, the negative electrode plate, and the separator film can be made into an electrode assembly by a winding process or a lamination process. The electrode assembly is encapsulated into the accommodating cavity. The number of electrode assemblies contained in the secondary battery may be one or more, and may be adjusted according to requirements.

In some embodiments, the outer package of the secondary battery may be a hard case, such as a hard plastic case, an aluminum case, or a steel case.

The outer package of the secondary battery may also be a soft package, such as a bag-type soft package. The material of the soft package can be plastic, and for example may include at least one of polypropylene (PP), polybutylene terephthalate (PBT), and polybutylene succinate (PBS).

In some embodiments, secondary batteries may be assembled into a battery module, multiple secondary batteries may be contained in the battery module, and the specific number of secondary batteries can be adjusted according to the application and capacity of the battery module.

FIG. 2 shows a battery module 2 as an example. Referring to FIG. 2, in the battery module 2, multiple secondary batteries 1 may be sequentially arranged along a length direction of the battery module 2. Of course, they may be arranged in any other way. The multiple secondary batteries 1 can be further fixed by fasteners.

The battery module 2 may further include a shell with an accommodating space. The multiple secondary batteries 1 are accommodated in the accommodating space. In some embodiments, the battery modules may further be assembled into a battery pack, and the number of battery modules contained in the battery pack may be adjusted according to the application and capacity of the battery pack.

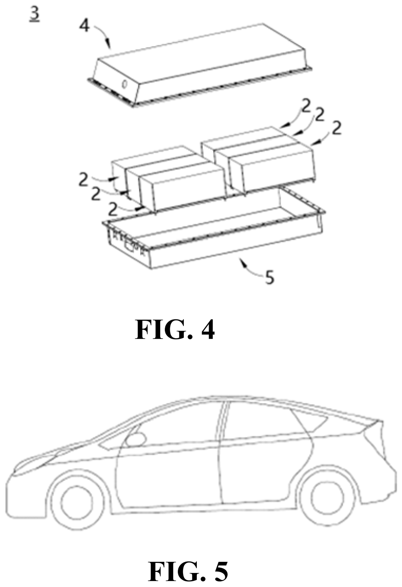

FIG. 3 and FIG. 4 show a battery pack 3 as an example. Referring to FIG. 3 and FIG. 4, the battery pack 3 may include a battery box and multiple battery modules 2 arranged in the battery box. The battery box includes an upper box 4 and a lower box 5. The upper box 4 can cover the lower box 5 to form an enclosed space for accommodating the battery module 2. The multiple battery modules 2 may be arranged in the battery box in any manner.

According to a third aspect, the present application provides an electrical device, which includes the secondary battery according to the second aspect. Specifically, the secondary battery may be used as a power source for the electrical device or an energy storage unit for the electrical device. The electrical device may include, but not limited to, a mobile apparatus (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, and an energy storage system.

FIG. 5 is an electrical device as an example. The electrical device includes an all-electric vehicle, a hybrid electric vehicle, or a plug-in hybrid electric vehicle.

As another example, the electrical device may include a mobile phone, a tablet, and a laptop. The electrical device is generally required to be light and thin and may use a secondary battery as a power source.

In order to make the technical problems addressed by, the technical solutions, and the beneficial effects of the embodiments of the present application clearer, the following will further describe them in detail in conjunction with the embodiments and the accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

Example 1

Preparation of secondary battery containing electrolyte solution for lithium secondary battery

1. Preparation of electrolyte solution for lithium secondary battery

Ethylene carbonate (EC) and ethyl methyl carbonate (EMC) were mixed according to a mass ratio of 30:70 to obtain an organic solvent, and fully dried electrolyte salt $LiPF_6$, a sulfate, lithium fluorosulfonate, and a positive electrode film-forming additive, lithium difluorophosphate, and lithium tetrafluoroborate were dissolved in the solvent, and uniform mixing was performed to obtain an electrolyte solution for a lithium secondary battery.
Molecular sieves were added to the electrolyte solution for a lithium secondary battery, the molecular sieves were enabled to fully contact with the electrolyte solution for a lithium secondary battery to adsorb water and HF in the electrolyte solution for a lithium secondary battery, and then the molecular sieves were separated from the electrolyte solution for a lithium secondary battery through a method such as filtration to remove water and HF in the electrolyte solution for a lithium secondary battery.

2. Preparation of secondary battery

Preparation of positive electrode plate

A positive electrode active material $LiNi_{0.8}Co_{0.1}Mn_{0.1}O_2$(NCM811), a conductive agent carbon black (Super P), and a binder polyvinylidene fluoride (PVDF) were uniformly mixed in a suitable amount of solvent N-Methylpyrrolidone (NMP) according to a mass ratio of 96.2:2.7:1.1 to obtain a positive electrode slurry, the positive electrode slurry was coated onto a positive electrode current collector aluminum foil, and then drying, cold pressing, slitting and cutting processes were performed to obtain a positive electrode plate.

Preparation of negative electrode plate

A negative electrode active material artificial graphite, a conductive agent carbon black (Super P), a binder polymerized styrene butadiene rubber (SBR), and carboxymethyl cellulose sodium (CMC-Na) were uniformly mixed in a suitable amount of solvent deionized water according to a mass ratio of 96.4:0.7:1.8:1.1 to obtain a negative electrode slurry, the negative electrode slurry was coated onto a negative electrode current collector copper foil, and then drying, cold pressing, slitting and cutting processes were performed to obtain a negative electrode plate.

A polyethylene film was used as a separator.

The positive electrode plate, the separator, and the negative electrode plate were stacked in sequence, so that the separator was located between the positive electrode plate and the negative electrode plate to play a role of separation, and then winding was performed to obtain an electrode assembly; the electrode assembly was placed in an outer package, the electrolyte solution for a lithium secondary battery was injected into the dried secondary battery, and vacuum packaging, standing, formation, and shaping processes were performed to obtain a secondary battery.
For secondary batteries in Examples 2-49 and Comparative Examples 1-2, except for different parameters (see Table 1), others were the same as Example 1.
Components of gel polymer electrolytes in secondary batteries in Examples 1-49 and Comparative Examples 1-2 of the present application were as shown in Table 1.

Table 1

| S/N | Molar ratio of sulfate to fluosulfonate ions | Concentration of sulfate (mol/L) | Concentration of fluosulfonate ions (mol/L) | Positive electrode film-forming additive | Ratio of molar amount of positive electrode film-forming additive to sum of molar amounts of sulfate and difluorophosphate ions | Concentration of positive electrode film-forming additive (mol/L) |
|---|---|---|---|---|---|---|
| Example 1 | 30:1 | 0.15 | 0.005 | Fluoroethylene carbonate and 1,3-propanesultone | 0.1:1 | 0.0155 |
| Example 2 | 222.2:1 | 0.2 | 0.0009 | Fluoroethylene carbonate and 1,4-propanesultone | 0.077:1 | 0.0155 |
| Example 3 | 8.9:1 | 0.08 | 0.009 | Fluoroethylene carbonate and 1,5-propanesultone | 0.17:1 | 0.0155 |
| Example 4 | 10:1 | 0.09 | 0.009 | Fluoroethylene carbonate and 1,6-propanesultone | 0.16:1 | 0.0155 |
| Example 5 | 60:1 | 0.18 | 0.003 | Fluoroethylene carbonate and 1,7-propanesultone | 0.08:1 | 0.0155 |
| Example 6 | 20:1 | 0.1 | 0.005 | Fluoroethylene carbonate and 1,8-propanesultone | 0.15:1 | 0.0155 |
| Example 7 | 80:1 | 0.08 | 0.001 | Fluoroethylene carbonate and 1,9-propanesultone | 0.19:1 | 0.0155 |
| Example 8 | 13.3:1 | 0.08 | 0.006 | Fluoroethylene carbonate and 1,10-propanesultone | 0.18:1 | 0.0155 |
| Example 9 | 30:1 | 0.15 | 0.005 | Fluoroethylene carbonate | 0.1:1 | 0.0155 |
| Example 10 | 30:1 | 0.15 | 0.005 | 1,3-propanesultone | 0.1:1 | 0.0155 |
| Example 11 | 30:1 | 0.15 | 0.005 | / | / | / |
| Example 12 | 8:1 | 0.15 | 0.019 | / | / | / |

(continued)

| S/N | Molar ratio of sulfate to fluosulfonate ions | Concentration of sulfate (mol/L) | Concentration of fluosulfonate ions (mol/L) | Positive electrode film-forming additive | Ratio of molar amount of positive electrode film-forming additive to sum of molar amounts of sulfate and difluorophosphate ions | Concentration of positive electrode film-forming additive (mol/L) |
|---|---|---|---|---|---|---|
| Example 13 | 223:1 | 0.223 | 0.001 | / | / | / |
| Example 14 | 100:1 | 0.1 | 0.001 | / | / | / |
| Example 15 | 16.7:1 | 0.15 | 0.009 | / | / | / |
| Example 16 | 50:1 | 0.15 | 0.003 | / | / | / |
| Example 17 | 30:1 | 0.15 | 0.005 | Fluoroethylene carbonate and 1,3-propanesultone | 0.1:1 | 0.0155 |
| Example 18 | 30:1 | 0.15 | 0.005 | Fluoroethylene carbonate and 1,3-propanesultone | 0.37:1 | 0.057 |
| Example 19 | 30:1 | 0.15 | 0.005 | Fluoroethylene carbonate and 1,3-propanesultone | 0.05:1 | 0.0078 |
| Example 20 | 30:1 | 0.15 | 0.005 | Fluoroethylene carbonate and 1,3-propanesultone | 0.06:1 | 0.0093 |
| Example 21 | 30:1 | 0.15 | 0.005 | Fluoroethylene carbonate and 1,3-propanesultone | 0.3:1 | 0.0465 |
| Example 22 | 30:1 | 0.15 | 0.005 | Fluoroethylene carbonate and 1,4-propanesultone | / | / |
| Example 23 | 30:1 | 0.15 | 0.005 | Fluoroethylene carbonate and 1,4-propanesultone | / | / |
| Example 24 | 30:1 | 0.15 | 0.005 | Fluoroethylene carbonate and 1,4-propanesultone | / | / |

(continued)

| S/N | Molar ratio of sulfate to fluosulfonate ions | Concentration of sulfate (mol/L) | Concentration of fluosulfonate ions (mol/L) | Positive electrode film-forming additive | Ratio of molar amount of positive electrode film-forming additive to sum of molar amounts of sulfate and difluorophosphate ions | Concentration of positive electrode film-forming additive (mol/L) |
|---|---|---|---|---|---|---|
| Example 25 | 30:1 | 0.15 | 0.005 | Fluoroethylene carbonate and 1,4-propanesultone | / | / |
| Example 26 | 30:1 | 0.15 | 0.005 | Fluoroethylene carbonate and 1,4-propanesultone | / | / |
| Example 27 | 30:1 | 0.15 | 0.005 | Fluoroethylene carbonate and 1,5-propanesultone | / | / |
| Example 28 | 30:1 | 0.15 | 0.005 | Fluoroethylene carbonate and 1,5-propanesultone | / | / |
| Example 29 | 30:1 | 0.15 | 0.005 | Fluoroethylene carbonate and 1,5-propanesultone | / | / |
| Example 30 | 30:1 | 0.15 | 0.005 | Fluoroethylene carbonate and 1,5-propanesultone | / | / |
| Example 31 | 30:1 | 0.15 | 0.005 | Fluoroethylene carbonate and 1,5-propanesultone | 0.1:1 | 0.0155 |
| Example 32 | 88.9:1 | 0.08 | 0.0009 | Fluoroethylene carbonate and 1,6-propanesultone | 0.37:1 | 0.03 |
| Example 33 | 22.2:1 | 0.2 | 0.009 | Fluoroethylene carbonate and 1,7-propanesultone | 0.05:1 | 0.01 |
| Example 34 | 22.2:1 | 0.2 | 0.009 | Fluoroethylene carbonate and 1,3-propanesultone | 0.074:1 | 0.0155 |

EP 4 723 279 A1

| S/N | Molar ratio of sulfate to fluosulfonate ions | Concentration of sulfate (mol/L) | Concentration of fluosulfonate ions (mol/L) | Positive electrode film-forming additive | Ratio of molar amount of positive electrode film-forming additive to sum of molar amounts of sulfate and difluorophosphate ions | Concentration of positive electrode film-forming additive (mol/L) |
|---|---|---|---|---|---|---|
| Example 35 | 88.9:1 | 0.08 | 0.0009 | Fluoroethylene carbonate and 1,4-propanesultone | 0.37:1 | 0.03 |
| Example 36 | 22.2:1 | 0.2 | 0.009 | Fluoroethylene carbonate and 1,3-propanesultone | 0.074:1 | 0.0155 |
| Example 37 | 22.2:1 | 0.2 | 0.009 | Fluoroethylene carbonate and 1,3-propanesultone | 0.074:1 | 0.0155 |
| Example 38 | 80:1 | 0.08 | 0.001 | Fluoroethylene carbonate and 1,9-propanesultone | 0.19:1 | 0.0155 |
| Example 39 | 80:1 | 0.08 | 0.001 | Fluoroethylene carbonate and 1,9-propanesultone | 0.19:1 | 0.0155 |
| Example 40 | 80:1 | 0.08 | 0.001 | Fluoroethylene carbonate and 1,9-propanesultone | 0.19:1 | 0.0155 |
| Example 41 | 80:1 | 0.08 | 0.001 | Fluoroethylene carbonate and 1,9-propanesultone | 0.19:1 | 0.0155 |
| Example 42 | 30:1 | 0.15 | 0.005 | Fluoroethylene carbonate and 1,3-propanesultone | 0.1:1 | 0.0155 |
| Example 43 | 30:1 | 0.15 | 0.005 | Fluoroethylene carbonate and 1,3-propanesultone | 0.1:1 | 0.0155 |
| Example 44 | 30:1 | 0.15 | 0.005 | Fluoroethylene carbonate and 1,3-propanesultone | 0.1:1 | 0.0155 |

| S/N | Molar ratio of sulfate to fluosulfonate ions | Concentration of sulfate (mol/L) | Concentration of fluosulfonate ions (mol/L) | Positive electrode film-forming additive | Ratio of molar amount of positive electrode film-forming additive to sum of molar amounts of sulfate and difluorophosphate ions | Concentration of positive electrode film-forming additive (mol/L) |
|---|---|---|---|---|---|---|
| Example45 | 30:1 | 0.15 | 0.005 | Fluoroethylene carbonate and 1,3-propanesultone | 0.1:1 | 0.0155 |
| Example 46 | 30:1 | 0.15 | 0.005 | Fluoroethylene carbonate and 1,3-propanesultone | 0.1:1 | 0.0155 |
| Example 47 | 30:1 | 0.15 | 0.005 | Fluoroethylene carbonate and 1,3-propanesultone | 0.1:1 | 0.0155 |
| Example 48 | 30:1 | 0.15 | 0.005 | Fluoroethylene carbonate and 1,3-propanesultone | 0.1:1 | 0.0155 |
| Example 49 | 30:1 | 0.15 | 0.005 | Fluoroethylene carbonate and 1,3-propanesultone | 0.1:1 | 0.0155 |
| Comparative Example 1 | 5:1 | 0.08 | 0.016 | Fluoroethylene carbonate and 1,3-propanesultone | 0.16:1 | 0.0155 |
| Comparative Example 2 | 230:1 | 0.207 | 0.0009 | Fluoroethylene carbonate and 1,4-propanesultone | 0.075:1 | 0.0155 |
| Example 1 | 0.26:1 | 0.04 | 0.0007 | 0.0045:1 | $LiNi_{0.4}Co_{0.4}Mn_{0.2}O_2$ | 2 |
| Example 2 | 0.2:1 | 0.04 | 0.0007 | 0.003:1 | $LiNi_{0.4}Co_{0.4}Mn_{0.2}O_2$ | 2 |
| Example 3 | 0.45:1 | 0.04 | 0.0007 | 0.008:1 | $LiNi_{0.4}Co_{0.4}Mn_{0.2}O_2$ | 2 |
| Example 4 | 0.4:1 | 0.04 | 0.0007 | 0.007:1 | $LiNi_{0.4}Co_{0.4}Mn_{0.2}O_2$ | 2 |
| Example 5 | 0.22:1 | 0.04 | 0.0007 | 0.004:1 | $LiNi_{0.4}Co_{0.4}Mn_{0.2}O_2$ | 2 |
| Example 6 | 0.38:1 | 0.04 | 0.0007 | 0.007:1 | $LiNi_{0.4}Co_{0.4}Mn_{0.2}O_2$ | 2 |
| Example 7 | 0.49:1 | 0.04 | 0.0007 | 0.0086:1 | $LiNi_{0.4}Co_{0.4}Mn_{0.2}O_2$ | 2 |

| S/N | Molar ratio of sulfate to fluosulfonate ions | Concentration of sulfate (mol/L) | Concentration of fluosulfonate ions (mol/L) | Positive electrode film-forming additive | Ratio of molar amount of positive electrode film-forming additive to sum of molar amounts of sulfate and difluorophosphate ions | Concentration of positive electrode film-forming additive (mol/L) |
|---|---|---|---|---|---|---|
| Example 8 | 0.47:1 | 0.04 | 0.0007 | 0.0081:1 | $LiNi_{0.4}Co_{0.4}Mn_{0.2}O_2$ | 2 |
| Example 9 | 0.26:1 | 0.04 | 0.0007 | 0.0045:1 | $LiNi_{0.4}Co_{0.4}Mn_{0.2}O_2$ | 2 |
| Example 10 | 0.26:1 | 0.04 | 0.0007 | 0.0045:1 | $LiNi_{0.4}Co_{0.4}Mn_{0.2}O_2$ | 2 |
| Example 11 | / | / | / | / | $LiNi_{0.4}Co_{0.4}Mn_{0.2}O_2$ | 2 |
| Example 12 | / | / | / | / | $LiNi_{0.4}Co_{0.4}Mn_{0.2}O_2$ | 2 |
| Example 13 | / | / | / | / | $LiNi_{0.4}Co_{0.4}Mn_{0.2}O_2$ | 2 |
| Example 14 | / | / | / | / | $LiNi_{0.4}Co_{0.4}Mn_{0.2}O_2$ | 2 |
| Example 15 | / | / | / | / | $LiNi_{0.4}Co_{0.4}Mn_{0.2}O_2$ | 2 |
| Example 16 | / | / | / | / | $LiNi_{0.4}Co_{0.4}Mn_{0.2}O_2$ | 2 |
| Example 17 | / | / | / | / | $LiNi_{0.4}Co_{0.4}Mn_{0.2}O_2$ | 2 |
| Example 18 | / | / | / | / | $LiNi_{0.4}Co_{0.4}Mn_{0.2}O_2$ | 2 |
| Example 19 | / | / | / | / | $LiNi_{0.4}Co_{0.4}Mn_{0.2}O_2$ | 2 |
| Example 20 | / | / | / | / | $LiNi_{0.4}Co_{0.4}Mn_{0.2}O_2$ | 2 |
| Example 21 | / | / | / | / | $LiNi_{0.4}Co_{0.4}Mn_{0.2}O_2$ | 2 |
| Example 22 | 0.26:1 | 0.04 | / | / | $LiNi_{0.4}Co_{0.4}Mn_{0.2}O_2$ | 2 |
| Example 23 | 0.048:1 | 0.0074 | / | / | $LiNi_{0.4}Co_{0.4}Mn_{0.2}O_2$ | 2 |
| Example 24 | 1:1 | 0.155 | / | / | $LiNi_{0.4}Co_{0.4}Mn_{0.2}O_2$ | 2 |
| Example 25 | 0.58:1 | 0.0899 | / | / | $LiNi_{0.4}Co_{0.4}Mn_{0.2}O_2$ | 2 |
| Example 26 | 0.13:1 | 0.0202 | / | / | $LiNi_{0.4}Co_{0.4}Mn_{0.2}O_2$ | 2 |
| Example 27 | / | / | 0.0007 | 0.0045:1 | $LiNi_{0.4}Co_{0.4}$ $Mn_{0.2}O_2$ | 2 |
| Example 28 | / | / | 0.0006 | 0.0038:1 | $LiNi_{0.4}Co_{0.4}Mn_{0.2}O_2$ | 2 |
| Example 29 | / | / | 0.0019 | 0.012:1 | $LiNi_{0.4}Co_{0.4}Mn_{0.2}O_2$ | 2 |
| Example 30 | / | / | 0.0012 | 0.008:1 | $LiNi_{0.4}Co_{0.4}Mn_{0.2}O_2$ | 2 |

(continued)

| S/N | Molar ratio of sulfate to fluosulfonate ions | Concentration of sulfate (mol/L) | Concentration of fluosulfonate ions (mol/L) | Positive electrode film-forming additive | Ratio of molar amount of positive electrode film-forming additive to sum of molar amounts of sulfate and difluorophosphate ions | Concentration of positive electrode film-forming additive (mol/L) |
|---|---|---|---|---|---|---|
| Example 31 | 0.26:1 | 0.04 | / | / | $LiNi_{0.4}Co_{0.4}Mn_{0.2}O_2$ | 2 |
| Example 32 | 0.49:1 | 0.04 | 0.0007 | 0.0087:1 | $LiNi_{0.4}Co_{0.4}Mn_{0.2}O_2$ | 2 |
| Example 33 | 0.19:1 | 0.04 | 0.0007 | 0.0033:1 | $LiNi_{0.4}Co_{0.4}Mn_{0.2}O_2$ | 2 |
| Example 34 | 0.048:1 | 0.01 | 0.0007 | 0.003:1 | $LiNi_{0.4}Co_{0.4}Mn_{0.2}O_2$ | 2 |
| Example 35 | 0.99:1 | 0.08 | 0.0007 | 0.0087:1 | $LiNi_{0.4}Co_{0.4}Mn_{0.2}O_2$ | 2 |
| Example 36 | 0.095:1 | 0.02 | 0.0007 | 0.003:1 | $LiNi_{0.4}Co_{0.4}Mn_{0.2}O_2$ | 2 |
| Example 37 | 0.29:1 | 0.06 | 0.0007 | 0.003:1 | $LiNi_{0.4}Co_{0.4}Mn_{0.2}O_2$ | 2 |
| Example 38 | 0.49:1 | 0.04 | 0.001 | 0.012:1 | $LiNi_{0.4}Co_{0.4}Mn_{0.2}O_2$ | 2 |
| Example 39 | 0.49:1 | 0.04 | 0.0006 | 0.007:1 | $LiNi_{0.4}Co_{0.4}Mn_{0.2}O_2$ | 2 |
| Example 40 | 0.49:1 | 0.04 | 0.0005 | 0.006:1 | $LiNi_{0.4}Co_{0.4}Mn_{0.2}O_2$ | 2 |
| Example 41 | 0.49:1 | 0.04 | 0.0008 | 0.01:1 | $LiNi_{0.4}Co_{0.4}Mn_{0.2}O_2$ | 2 |
| Example 42 | 0.26:1 | 0.04 | 0.0007 | 0.0045:1 | $LiNi_{0.1}Co_{0.4}Mn_{0.5}O_2$ | 2 |
| Example 43 | 0.26:1 | 0.04 | 0.0007 | 0.0045:1 | $LiNi_{0.19}Co_{0.8}Mn_{0.01}O_2$ | 2 |
| Example 44 | 0.26:1 | 0.04 | 0.0007 | 0.0045:1 | $LiNi_{0.45}Co_{0.05}Mn_{0.5}O_2$ | 2 |
| Example45 | 0.26:1 | 0.04 | 0.0007 | 0.0045:1 | $LiNi_{0.4}Co_{0.4}Fe_{0.2}O_2$ | 2 |
| Example 46 | 0.26:1 | 0.04 | 0.0007 | 0.0045:1 | $LiNi_{0.4}Co_{0.4}Al_{0.2}O_2$ | 2 |
| Example 47 | 0.26:1 | 0.04 | 0.0007 | 0.0045:1 | $LiNi_{0.4}Co_{0.4}Mn_{0.2}O_2$ | 1 |
| Example 48 | 0.26:1 | 0.04 | 0.0007 | 0.0045:1 | $LiNi_{0.4}Co_{0.4}Mn_{0.2}O_2$ | 2.5 |
| Example 49 | 0.26:1 | 0.04 | 0.0007 | 0.0045:1 | $LiNi_{0.4}Co_{0.4}Mn_{0.2}O_2$ | 3 |
| Comparative Example 1 | 0.42:1 | 0.04 | 0.0007 | 0.007:1 | $LiNi_{0.4}Co_{0.4}Mn_{0.2}O_2$ | 2 |
| Comparative Example 2 | 0.19:1 | 0.04 | 0.0007 | 0.0034:1 | $LiNi_{0.4}Co_{0.4}Mn_{0.2}O_2$ | 2 |

"/" in Table 1 indicates that the corresponding substance is not added or the added amount is 0.

Performance test of secondary battery:

1. Capacity and cycling performance test of secondary battery

Taking Example 1 as an example, at 25°C, the secondary battery charged at a constant current of 0.5C to a charging cut-off voltage of 4.2V, then charged at a constant voltage to a current of ≤ 0.05C and stood for 5min, then discharged at a constant current rate of 0.33C to a discharging cut-off voltage of 2.8V, and stood for 5min, and the battery capacity $C_0$ at this time was recorded, which was the initial capacity of the secondary battery. According to this method, the secondary battery was charged and discharged for 200 cycles, and the discharging capacity of the secondary battery after 200 cycles was recorded as $C_1$, which was the capacity of the secondary battery after 200 cycles.

$$\text{Cycling capacity retention rate of secondary battery} = C_1/C_0 * 100\%$$

The testing process for the capacity of the secondary batteries in Examples 2-49 and Comparative Examples 1-2 was the same as the above.

2. Direct current internal resistance of secondary battery

Taking Example 1 as an example, the secondary battery was charged to 4.15V at a constant current of 1C at 25°C, then charged at a constant voltage of 4.15V until the current dropped to 0.05C, then discharged to 2.5V at a constant current of 1C, and then stood for 5min (stabilization time), a next cycle was performed, the voltage of the secondary battery before the discharging was stopped and the voltage of the secondary battery after the voltage of the secondary battery stabilized were recorded for each cycle, and finally the DC impedance was calculated by using the formula R=ΔU/I (where ΔU was the voltage difference, R was the DC resistance, and I was the discharging current).

Increase rate of internal resistance of secondary battery=(internal resistance of secondary battery after 200 cycles - initial internal resistance of secondary battery)/initial internal resistance of secondary battery*100%

The testing process for the DC internal resistance of the secondary batteries in Examples 2-49 and Comparative Examples 1-2 was the same as the above.

The performance test results of the secondary batteries of all examples and comparative examples were as shown in Table 2.

Table 2

| S/N | Initial capacity of secondary battery (mAh/g) | Capacity of secondary battery after 200 cycles (mAh/g) | Capacity retention rate of secondary battery | Initial internal resistance of secondary battery (Ω) | Internal resistance of secondary battery after 200 cycles (Ω) | Increase rate of internal resistance |
|---|---|---|---|---|---|---|
| Example 1 | 100 | 97.7 | 97.7% | 20.5 | 22.7 | 10.7% |
| Example 2 | 100.2 | 96.3 | 96.1% | 20.8 | 23.7 | 13.9% |
| Example 3 | 100.1 | 96.1 | 96.0% | 20.9 | 24.1 | 15.3% |
| Example 4 | 100.1 | 97.1 | 97.0% | 20.3 | 22.8 | 12.3% |
| Example 5 | 100.2 | 97.3 | 97.1% | 20.4 | 22.6 | 10.8% |
| Example 6 | 100.3 | 98.6 | 98.3% | 20.1 | 21.9 | 9.0% |
| Example 7 | 100 | 96.6 | 96.6% | 20.3 | 23.1 | 13.8% |
| Example 8 | 100.2 | 97.2 | 97.00% | 20.3 | 22.7 | 11.80% |
| Example 9 | 99.9 | 97.1 | 97.2% | 20.9 | 23.5 | 12.4% |
| Example 10 | 100 | 97.1 | 97.1% | 21.3 | 24.7 | 16.0% |

(continued)

| S/N | Initial capacity of secondary battery (mAh/g) | Capacity of secondary battery after 200 cycles (mAh/g) | Capacity retention rate of secondary battery | Initial internal resistance of secondary battery (Ω) | Internal resistance of secondary battery after 200 cycles (Ω) | Increase rate of internal resistance |
|---|---|---|---|---|---|---|
| Example 11 | 99.8 | 96.5 | 96.7% | 21 | 24.3 | 15.7% |
| Example 12 | 100.1 | 96.0 | 95.9% | 22.2 | 25.6 | 15.4% |
| Example 13 | 100 | 96.0 | 96.0% | 23.1 | 26.3 | 14.0% |
| Example 14 | 99.9 | 97.5 | 97.6% | 21.4 | 23.7 | 10.8% |
| Example 15 | 100 | 96.6 | 96.6% | 21.6 | 25.0 | 15.6% |
| Example 16 | 100.2 | 96.7 | 96.5% | 21.8 | 25.2 | 15.8% |
| Example 17 | 99.7 | 96.4 | 96.7% | 21.1 | 24.4 | 15.6% |
| Example 18 | 100.1 | 96.4 | 96.3% | 22.1 | 25.6 | 15.7% |
| Example 19 | 100.2 | 96.7 | 96.5% | 22 | 25.5 | 15.8% |
| Example 20 | 100 | 96.7 | 96.7% | 21.9 | 25.3 | 15.6% |
| Example 21 | 100.1 | 96.7 | 96.6% | 22 | 25.4 | 15.5% |
| Example 22 | 99.6 | 95.9 | 96.3% | 21.3 | 24.9 | 16.9% |
| Example 23 | 100 | 96.2 | 96.2% | 21.1 | 24.7 | 17.1% |
| Example 24 | 100.1 | 96.2 | 96.1% | 21.5 | 25.2 | 17.0% |
| Example 25 | 100.1 | 96.1 | 96.0% | 21.3 | 25.0 | 17.2% |
| Example 26 | 100 | 96.1 | 96.1% | 21.6 | 25.3 | 17.0% |
| Example 27 | 99.7 | 96 | 96.3% | 21.4 | 25 | 16.8% |
| Example 28 | 100.1 | 96.4 | 96.3% | 21.2 | 24.8 | 16.8% |
| Example 29 | 100.2 | 96.3 | 96.1% | 21.3 | 24.9 | 16.9% |
| Example 30 | 100 | 96.0 | 96.0% | 21.1 | 24.6 | 16.8% |
| Example 31 | 99.6 | 96.1 | 96.5% | 21.5 | 25.1 | 16.7% |
| Example 32 | 100 | 97.7 | 97.7% | 20.4 | 22.4 | 9.8% |
| Example 33 | 100.1 | 98 | 97.9% | 20.3 | 23.1 | 13.8% |
| Example 34 | 99.8 | 96.5 | 96.7% | 21.7 | 25.8 | 18.9% |
| Example 35 | 99.9 | 96.4 | 96.5% | 21.9 | 25.9 | 18.3% |
| Example 36 | 100.1 | 98 | 97.9% | 20.6 | 22.1 | 7.3% |
| Example 37 | 99.9 | 98.1 | 98.2% | 20.4 | 22 | 7.8% |
| Example 38 | 99.9 | 96.6 | 96.7% | 20.5 | 23.4 | 14.1% |
| Example 39 | 100 | 97.6 | 97.6% | 20.4 | 22.9 | 12.3% |
| Example 40 | 99.8 | 96.9 | 97.1% | 20.4 | 23.3 | 14.2% |
| Example 41 | 100 | 97.8 | 97.8% | 20.6 | 22.6 | 9.7% |
| Example 42 | 100 | 96.5 | 96.5% | 20.6 | 23.2 | 12.6% |
| Example 43 | 100.3 | 96.1 | 95.8% | 20.7 | 23.5 | 13.5% |
| Example 44 | 99.9 | 95.6 | 95.7% | 20.5 | 23.7 | 15.6% |
| Example 45 | 100.2 | 95.8 | 95.6% | 20.9 | 23.4 | 12.0% |
| Example 46 | 100.4 | 95.9 | 95.5% | 21 | 23.3 | 11.0% |

(continued)

| S/N | Initial capacity of secondary battery (mAh/g) | Capacity of secondary battery after 200 cycles (mAh/g) | Capacity retention rate of secondary battery | Initial internal resistance of secondary battery ($\Omega$) | Internal resistance of secondary battery after 200 cycles ($\Omega$) | Increase rate of internal resistance |
|---|---|---|---|---|---|---|
| Example 47 | 100 | 97.8 | 97.8% | 20.6 | 22.5 | 9.2% |
| Example 48 | 100 | 97.6 | 97.6% | 20.7 | 22.9 | 10.6% |
| Example 49 | 99.9 | 96.1 | 96.2% | 20.4 | 24.1 | 18.1% |
| Comparative Example 1 | 99.7 | 78.6 | 78.8% | 21.6 | 30.6 | 41.7% |
| Comparative Example 2 | 99.9 | 80.5 | 80.6% | 21.2 | 29.3 | 38.2% |

From Table 2, it can be seen that in Examples 1-49 of the present application, the sulfate and the fluorosulfonate ions are added to the electrolyte solutions for the lithium secondary batteries, and the electrolyte solutions for the lithium secondary batteries include the sulfate and the fluorosulfonate ions mixed according to the above ratio, and the two are simultaneously used, thus reducing the DC internal resistance of the secondary batteries and improving the storage performance and cycling performance of the secondary batteries. Compared with Examples 1-49, the molar ratio of the sulfate to the fluorosulfonate ions in Comparative Examples 1-2 is not within the range in the present application, resulting in a significant decrease in the storage performance and cycling performance of the secondary batteries, and a significant increase in the DC internal resistance.

Finally, it should be noted that the above embodiments are only used for describing, instead of limiting, the technical solutions of the present application; although the present application is described in detail with reference to the foregoing embodiments, those skilled in the art should understand that they may modify the technical solutions described in the foregoing embodiments, or replace some or all of the technical features therein; however, these modifications or replacements do not make the essence of the corresponding technical solutions deviate from the scope of the technical solutions of the embodiments of the present application, and should be all included in the scope of the claims and description of the present application. In particular, the technical features mentioned in the various embodiments can be combined in any manner as long as there is no structural conflict. The present application is not limited to the particular embodiments disclosed herein, but rather includes all technical solutions falling within the scope of the claims.

**Claims**

1. An electrolyte solution for a lithium secondary battery, wherein the electrolyte solution for a lithium secondary battery comprises a sulfate and fluorosulfonate ions, and a molar ratio of the sulfate to the fluorosulfonate ions is (8-223):1.

2. The electrolyte solution for a lithium secondary battery according to claim 1, wherein the molar ratio of the sulfate to the fluorosulfonate ions is (10-60):1, and optionally (16.7-50):1.

3. The electrolyte solution for a lithium secondary battery according to claim 1 or 2, wherein the molar concentration of the sulfate in the electrolyte solution for a lithium secondary battery is 0.08mol/L-0.2mol/L, and optionally 0.1mol/L-0.15mol/L.

4. The electrolyte solution for a lithium secondary battery according to any one of claims 1 to 3, wherein the molar concentration of the fluorosulfonate ions in the electrolyte solution for a lithium secondary battery is 0.0009mol/L-0.009mol/L, and optionally 0.003mol/L-0.006mol/L.

5. The electrolyte solution for a lithium secondary battery according to any one of claims 1 to 4, wherein the sulfate comprises at least one of ethylene sulfate, 4-methyl ethylene sulfate, 4-fluoroethylene sulfate, 4-n-propyl ethylene sulfate, and 4,4'-bis(ethylene sulfate).

6. The electrolyte solution for a lithium secondary battery according to any one of claims 1 to 5, wherein the fluorosulfonate ions are $ASO_3F$, wherein A comprises at least one of Li, Na, K, and H.

7. The electrolyte solution for a lithium secondary battery according to any one of claims 1 to 6, wherein the electrolyte solution for a lithium secondary battery further comprises a positive electrode film-forming additive.

8. The electrolyte solution for a lithium secondary battery according to claim 7, wherein the positive electrode film-forming additive comprises at least one of fluoroethylene carbonate and 1,3-propanesultone.

9. The electrolyte solution for a lithium secondary battery according to claim 7 or 8, wherein a ratio of the molar amount of the positive electrode film-forming additive to a sum of the molar amounts of the sulfate and the fluorosulfonate ions in the electrolyte solution for a lithium secondary battery is (0.05-0.37):1, and optionally (0.06-0.3):1.

10. The electrolyte solution for a lithium secondary battery according to any one of claims 7 to 9, wherein the molar concentration of the positive electrode film-forming additive in the electrolyte solution for a lithium secondary battery is 0.01mol/L-0.03mol/L.

11. The electrolyte solution for a lithium secondary battery according to any one of claims 1 to 10, wherein the electrolyte solution for a lithium secondary battery further comprises difluorophosphate ions.

12. The electrolyte solution for a lithium secondary battery according to claim 11, wherein a ratio of the molar amount of the difluorophosphate ions to a sum of the molar amounts of the sulfate and the fluorosulfonate ions in the electrolyte solution for a lithium secondary battery is (0.048-1):1, and optionally (0.13-0.58):1.

13. The electrolyte solution for a lithium secondary battery according to claim 11 or 12, wherein the molar concentration of the difluorophosphate ions in the electrolyte solution for a lithium secondary battery is 0.01mol/L-0.08mol/L, and optionally 0.02mol/L-0.06mol/L.

14. The electrolyte solution for a lithium secondary battery according to any one of claims 11 to 13, wherein the difluorophosphate ions are $MPO_2F_2$, wherein M comprises at least one of Li, Na, K, and H.

15. The electrolyte solution for a lithium secondary battery according to any one of claims 1 to 14, wherein the electrolyte solution for a lithium secondary battery further comprises tetrafluoroborate ions.

16. The electrolyte solution for a lithium secondary battery according to claim 15, wherein a ratio of the molar amount of the tetrafluoroborate ions to a sum of the molar amounts of the sulfate and the fluorosulfonate ions in the electrolyte solution for a lithium secondary battery is (0.0024-0.012):1, and optionally (0.0038-0.008):1.

17. The electrolyte solution for a lithium secondary battery according to claim 15 or 16, wherein the molar concentration of the tetrafluoroborate ions in the electrolyte solution for a lithium secondary battery is 0.0005mol/L-0.001mol/L, and optionally 0.0006mol/L-0.0008mol/L.

18. The electrolyte solution for a lithium secondary battery according to any one of claims 15 to 17, wherein the tetrafluoroborate ions are provided by at least one of the following substances: tetrafluoroboric acid, sodium tetrafluoroborate, potassium tetrafluoroborate, and lithium tetrafluoroborate.

19. The electrolyte solution for a lithium secondary battery according to any one of claims 1 to 18, wherein the electrolyte solution for a lithium secondary battery satisfies at least one of the following conditions:

the content of water in the electrolyte solution for a lithium secondary battery is less than or equal to 20ppm;
the content of HF in the electrolyte solution for a lithium secondary battery is less than or equal to 150ppm.

20. A secondary battery, wherein the secondary battery comprises the electrolyte solution for a lithium secondary battery according to any one of claims 1 to 19.

21. The secondary battery according to claim 20, wherein the secondary battery comprises a positive electrode active material, and the positive electrode active material comprises $Li_xNi_{(1-y-z)}Co_yM_zO_{2-b}$, wherein M comprises at least one of Mn, Al, Fe, Ti, Mg, Cr, Ga, Cu, Zn, Nb, and Zr, $0<x\leq1.2$, $0.05\leq y\leq0.8$, $0.01\leq z\leq0.5$, and $0\leq b\leq0.2$.

22. The secondary battery according to claim 21, wherein the BET specific surface area of the positive electrode active material is less than or equal to $3m^2/g$, and optionally, the BET specific surface area of the positive electrode active

material is $1m^2/g$-$2.5m^2/g$.

23. An electrical device, comprising the secondary battery according to any one of claims 20 to 22.

**FIG. 1**

**FIG. 2**

**FIG. 3**

**FIG. 4**

**FIG. 5**

## INTERNATIONAL SEARCH REPORT

| International application No. |
|---|
| **PCT/CN2023/097821** |

| A. | CLASSIFICATION OF SUBJECT MATTER |
|---|---|
| | H01M10/0567(2010.01)i; H01M10/0525(2010.01)i |

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 电解液, 电解质, 添加剂, 溶剂, 硫酸酯, 硫酸乙烯酯, 氟磺酸锂, 氟磺酸钠, 氟磺酸钾, electrolyte, sulfate, additive, solvent, vinyl 1w sulfates, lithium 1w fluorosulfonate, sodium 1w fluorosulfonate, potassium 1w fluorosulfonate

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112736285 A (SUNWODA ELECTRIC VEHICLE BATTERY CO., LTD.) 30 April 2021 (2021-04-30) description, paragraphs 41-76 | 1-23 |
| A | CN 111883839 A (ENVISION POWER TECHNOLOGY (JIANGSU) CO., LTD.) 03 November 2020 (2020-11-03) entire document | 1-23 |
| A | CN 116111177 A (NINGDE CONTEMPORARY AMPEREX TECHNOLOGY CO., LTD.) 12 May 2023 (2023-05-12) entire document | 1-23 |
| A | JP 2011082033 A (MITSUBISHI CHEMICAL CORP.) 21 April 2011 (2011-04-21) entire document | 1-23 |
| A | US 2016204432 A1 (ISHIHARA SANGYO KAISHA, LTD.) 14 July 2016 (2016-07-14) entire document | 1-23 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2023** | **27 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/097821**

| Patent document cited in search report | | | Publication date (day/month/year) | Patent family member(s) | | | Publication date (day/month/year) |
|---|---|---|---|---|---|---|---|
| CN | 112736285 | A | 30 April 2021 | None | | | |
| CN | 111883839 | A | 03 November 2020 | None | | | |
| CN | 116111177 | A | 12 May 2023 | None | | | |
| JP | 2011082033 | A | 21 April 2011 | None | | | |
| US | 2016204432 | A1 | 14 July 2016 | KR | 20160054472 | A | 16 May 2016 |
| | | | | TW | 201511388 | A | 16 March 2015 |
| | | | | TWI | 616012 | B | 21 February 2018 |
| | | | | WO | 2015033620 | A1 | 12 March 2015 |
| | | | | JPWO | 2015033620 | A1 | 02 March 2017 |
| | | | | JP | 6232070 | B2 | 15 November 2017 |

Form PCT/ISA/210 (patent family annex) (July 2022)